# EUROPEAN PATENT APPLICATION

(11) **EP 2 756 932 A2**
(43) Date of publication of application: **23.07.2014**
(21) Application number: 14150691.5
(22) Date of filing: 10.01.2014
(51) Int. Cl.: B25J 9/10, B25J 9/00

(54) **Robot**

(30) Priority: 17.01.2013 JP 2013006678
(71) Applicant: Kabushiki Kaisha Yaskawa Denki, Kitakyushu-shi, Fukuoka 806-0004 (JP)
(72) Inventor: Takahashi, Shingi, Fukuoka 806-0004 (JP); Okada, Takuya, Fukuoka 806-0004 (JP); Shiraki, Tomoyuki, Fukuoka 806-0004 (JP)
(74) Representative: Grünecker, Kinkeldey, Stockmair & Schwanhäusser

(57) **Abstract**

A robot (1) includes a first actuator (Me), a first rotating body (34), a second actuator (Mf), and a second rotating body (42). The first actuator (Me) rotationally drives a second wrist (14b) that is connected to a first wrist (14a). The first rotating body (34) transmits a drive force of the first actuator (Me) to a second wrist (14b). The second actuator (Mf) rotationally drives a third wrist (14c) that is connected to the second wrist (14b). The second rotating body (42) transmits a drive force of the second actuator (Mf) to the third wrist (14c). The first rotating body (34) and the second rotating body (42) are arranged at positions where rotation axes (34a and 42a) of the first and second rotating bodies (34 and 42) are parallel with each other and do not interfere with each other in such a manner that the position of the first rotating body (34) is within a range of the second rotating body (42) when viewed from a direction perpendicular to the rotation axis (42a) of the second rotating body (42).

## Description

### FIELD

The embodiments discussed herein are directed to a robot.

### BACKGROUND

Conventionally, industrial robots have been developed that include an arm and a wrist section rotatably connected to the arm and are configured to cause an actuator to rotationally drive the wrist section to perform a predetermined operation using an end effector (for example, a torch for arc welding) attached to an end of the wrist section.

Some of the wrist sections in the robots as described above include a plurality of links rotatably connected to each other, for example. In such robots, one of the links, for example, is rotated with a drive force of a first actuator transmitted thereto through a first rotating body (for example, a pulley), and other is rotated with a drive force of a second actuator transmitted thereto through a second rotating body (see Japanese Patent Application Laid-open No. 2007-237342, for example). In the technique disclosed in Japanese Patent Application Laid-open No. 2007-237342, the rotation axis of the first rotating body and the rotation axis of the second rotating body are coaxial with each other, and the first and the second rotating bodies are disposed so as to overlap with each other into two layers along the direction of the rotation axes thereof.

However, when the first and the second rotating bodies are disposed coaxially to overlap with each other as described above, the width of the wrist section of the robot is enlarged along the direction of the rotation axes of the rotating bodies. If such enlargement of the width of the wrist section occurs, the wrist section may be at risk of interfering with a workpiece while the robot is performing a predetermined operation, for example. For this reason, reduction in size of the wrist section has been desired.

In light of the above-described problem, one aspect of embodiments aims to provide a robot including a smaller wrist section connected to an arm.

### SUMMARY

A robot according to one aspect of embodiments includes a first wrist, a second wrist, a third wrist, a first actuator, a first rotating body, a second actuator, and a second rotating body. The first wrist is connected to an arm. The second wrist is rotatably connected to the first wrist around a first rotation axis. The third wrist is rotatably connected to the second wrist around a second rotation axis that is perpendicular to the first rotation axis. The first actuator rotationally drives the second wrist. The first rotating body transmits a drive force of the first actuator to the second wrist. The second actuator rotationally drives the third wrist. The second rotating body transmits a drive force of the second actuator to the third wrist. Furthermore, the first and second rotating bodies are arranged at positions where rotation axes of the first and second rotating bodies are parallel with each other and do not interfere with each other in such a manner that the position of the first rotating body is within a range of the second rotating body when viewed from a direction perpendicular to the rotation axis of the second rotating body.

One aspect of the embodiments can reduce the size of the wrist section connected to the arm of the robot.

### BRIEF DESCRIPTION OF DRAWINGS

A more complete appreciation of the invention and many of the attendant advantages thereof will be readily obtained as the same becomes better understood by reference to the following detailed description when considered in connection with the accompanying drawings, wherein:
FIG. 1 is a side view illustrating a robot according to a first embodiment;
FIG. 2 is a partial sectional top view illustrating only a vicinity of an upper arm, a first wrist, a second wrist, and a third wrist illustrated in FIG. 1;
FIG. 3 is a side view illustrating the first wrist illustrated in FIG. 2 with a side-face cover thereof removed therefrom;
FIG. 4 is a partial sectional top view illustrating only a vicinity of an upper arm, a first wrist, a second wrist, and a third wrist in a robot according to a second embodiment;
FIG. 5 is a side view illustrating the first wrist illustrated in FIG. 4 with a side-face cover thereof removed therefrom;
FIG. 6 illustrates a modification of the robot according to the second embodiment and is a partial sectional top view illustrating only a vicinity of an upper arm, a first wrist, a second wrist, and a third wrist;
FIG. 7 is a side view illustrating the first wrist illustrated in FIG. 6 with a side-face cover thereof removed therefrom; and
FIG. 8 is a close-up sectional view taken along line VIII-VIII in FIG. 7.

### DESCRIPTION OF EMBODIMENTS

A first embodiment will be described first.

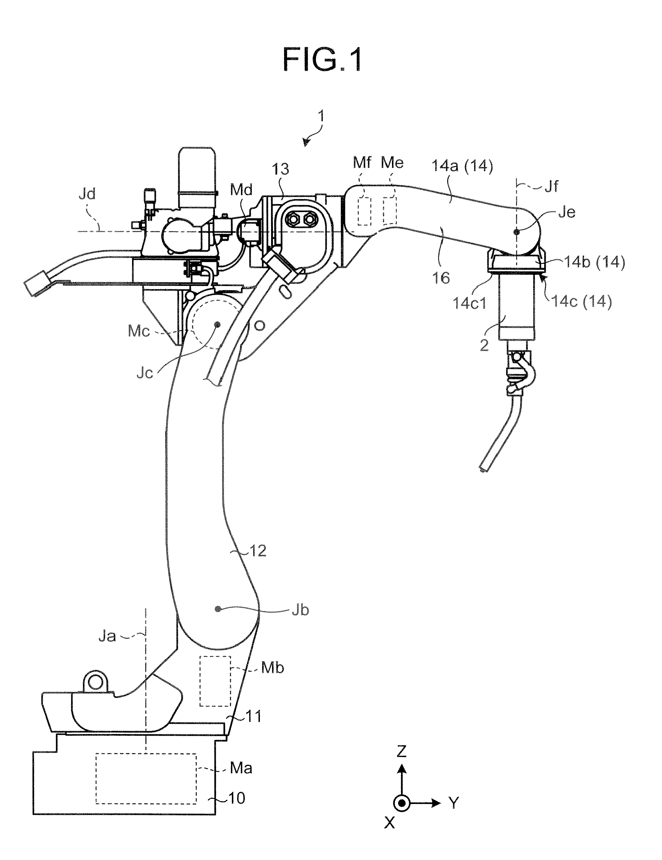

FIG. 1 is a side view illustrating a robot according to the first embodiment. For the sake of easier explanation, FIG. 1 includes a three-dimensional rectangular coordinate system having the Z axis of which the upward vertical direction is defined as the positive direction and the downward vertical direction is defined as the negative direction, the Y axis defined as the horizontal direction on the paper, and the X axis defined as the frontward direction from the back side of the paper. Such a rectangular coordinate system is shown in some other drawings used for the description below. The description below explains the structure of the robot using the expressions "X axis direction", "Y axis direction", and "Z axis direction". It should be noted that the "X axis direction", "Y axis direction", and "Z axis direction" are applied only in cases where the robot is in the posture illustrated in each drawing and are not intended to limit the directions of the robot.

As illustrated in FIG. 1, a robot 1 is an industrial robot for arc welding having a torch 2 for arc welding, for example, attached to an end thereof as an end effector. The robot 1 is also an articulated robot including a plurality of joint axes (hereinafter, also referred to as "rotation axes") Ja to Jf. The robot 1 includes a base 10, a rotary section 11, a lower arm 12, an upper arm 13, and a wrist section 14 consisting of a first wrist 14a, a second wrist 14b, and a third wrist 14c, each of which is rotatably connected to each other.

Specifically, the rotary section 11 is connected to the base 10 rotatably around the rotation axis Ja, and the lower arm 12 is connected to the rotary section 11 rotatably around the rotation axis Jb that is perpendicular to the rotary shaft Ja. The upper arm 13 is connected to the lower arm 12 rotatably around the rotation axis Jc that is parallel with the rotation axis Jb, and the first wrist 14a is connected to the upper arm 13 rotatably around the rotation axis Jd that is perpendicular to the rotation axis Jc.

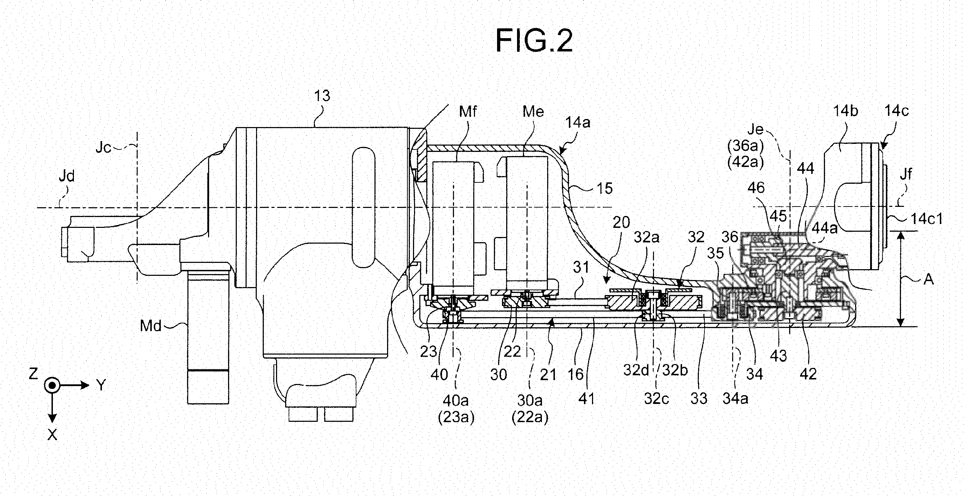

The second wrist 14b is connected to the first wrist 14a rotatably around the rotation axis (first rotation axis) Je that is perpendicular to the rotation axis Jd, and the third wrist 14c is connected to the second wrist 14b rotatably around the rotation axis (second rotation axis) Jf that is perpendicular to the rotation axis Je. It should be noted that the first wrist 14a and the second wrist 14b are connected at one section to form what is called a cantilever structure (see FIG. 2). As described above, the first wrist 14a corresponds to first wrist means, and the second wrist 14b corresponds to second wrist means rotated around the rotation axis (the first rotation axis) Je. Furthermore, the third wrist 14c corresponds to third wrist means rotated around the rotation axis (the second rotation axis) Jf that is perpendicular to the rotation axis (the first rotation axis) Je.

It should be noted that the terms "perpendicular" and "parallel" in the description above as well as "horizontal" in the description below are not intended to require stringent accuracy in a mathematical sense but shall allow substantial tolerances and errors. In addition, the term "perpendicular" herein used is intended to mean cases where the relation between two straight lines (rotation axes) are skew lines as well as cases where two straight lines (rotation axes) are perpendicular to each other on a plane.

The robot 1 includes actuators Ma to Mf that rotationally drive the rotary section 11, the lower arm 12, the upper arm 13, the first wrist 14a, the second wrist 14b, and the third wrist 14c described above. Each of the actuators Ma to Mf is a servo motor, for example, in concrete terms.

Although the actuators Ma to Mf are servo motors in the description above, the actuators Ma to Mf should not be limited to servo motors but may be other kind of motors such as hydraulic motors. The actuators will be referred to as "motors" in the description below.

To explain each of the motors Ma to Mf, the motor Ma attached to the base 10 is connected to the rotary section 11 to rotationally drive the rotary section 11.
The motor Mb attached to the rotary section 11 is connected to the lower arm 12 to rotationally drive the lower arm 12. The motor Mc attached to the lower arm 12 is connected to the upper arm 13 to rotationally drive the upper arm 13. The motor Md attached to the upper arm 13 is connected to the wrist section 14, or more specifically, to the first wrist 14a to rotationally drive the first wrist 14a in the wrist section 14.

The motor (first actuator) Me and the motor (second actuator) Mf both are attached to the first wrist 14a. The motor Me is connected to the second wrist 14b through a first power transmission mechanism (not illustrated in FIG. 1) that transmits the drive force of the motor Me to the second wrist 14b to rotationally drive the second wrist 14b. Similarly, the motor Mf is connected to the third wrist 14c through a second power transmission mechanism (not illustrated in FIG. 1) that transmits the drive force of the motor Mf to the third wrist 14c to rotationally drive the third wrist 14c. As described above, the motor Me corresponds to first output means for outputting a drive force to rotate the second wrist (the second wrist means) 14b. The motor Mf corresponds to second output means for outputting a drive force to rotate the third wrist (the third wrist means) 14c. It should be noted that the motors Me and Mf and the first and the second power transmission mechanisms will be further described below in detail.

The third wrist 14c includes a wrist flange 14cl to which the torch 2 described above is attached. The motors Ma to Mf described above receive a signal representing an operation instruction from a controller (not illustrated). Based on the signal, the operation is controlled. With the operation of the motor Ma to Mf controlled, the robot 1 brings the torch 2 near the object to be welded and generates an arc from the torch 2 while changing the position, the angle, and other conditions of the torch 2 as appropriate, for example, to perform arc welding.

In a robot that is configured to perform a predetermined operation such as arc welding with an end effecter attached to an end of a wrist section as described above, reduction in size of the wrist section has been desired conventionally. In other words, if the width of the wrist section, or more specifically, the width of the first wrist in the X axis direction is large, for example, the wrist section is at risk of interfering with a workpiece when the robot is performing a predetermined operation. It is therefore desirable that the width of the wrist section be as small as possible.

From the above-described background, in the robot 1 according to the present embodiment, the first and the second power transmission mechanisms that transmit the drive forces of the motors Me and Mf to the second wrist 14b and the third wrist 14c are configured such that the wrist section 14, or more specifically, the first wrist 14a can be reduced in size. The configuration will be described below in detail.

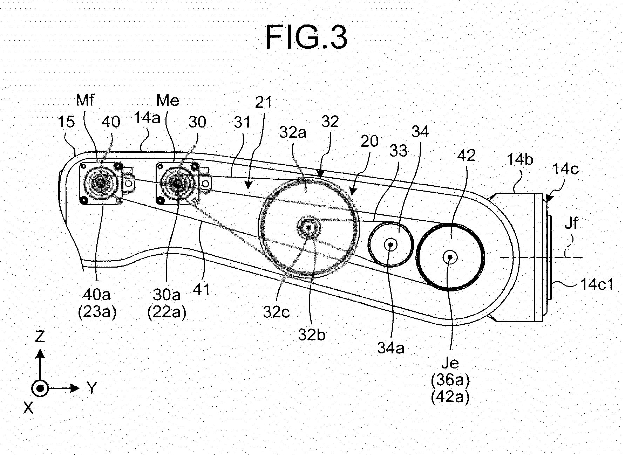

FIG. 2 is a partial sectional top view illustrating only a vicinity of the upper arm 13, the first wrist 14a, the second wrist 14b, and the third wrist 14c illustrated in FIG. 1. FIG. 3 is a side view illustrating the first wrist 14a illustrated in FIG. 2 with a side-face cover 16 thereof removed therefrom, as viewed from the positive side in the X axis direction.

In FIGS. 2 and 3, it should be noted that the lower arm 12 and the torch 2, for example, are not illustrated in order to simplify the illustration. Furthermore, FIGS. 2 and 3 illustrate the second wrist 14b having been rotated by 90 degrees around the rotation axis Je to be horizontal, that is, being in the posture that the rotation axis Jd is coaxial with the rotation axis Jf. Furthermore, in FIG. 3, only the elements necessary for the understanding of the configuration of each power transmission mechanism are illustrated.

As illustrated in FIG. 2, the first wrist 14a includes a body 15 having a space inside thereof and of which a side face (specifically, the positive side in the X axis direction in FIG. 2) is opened and the side-face cover 16 attached to the opening in the body 15.

Disposed in the space inside of the body 15 of the first wrist 14a are the motor Me, the motor Mf, a first power transmission mechanism 20 that transmits the drive forces of the motor Me to the second wrist 14b and a second power transmission mechanism 21 that transmits the drive force of the motor Mf to the third wrist 14c.

The motor Me includes an output shaft 22 and is oriented such that a shaft line 22a of the output shaft 22 is perpendicular to the rotation axis Jd, that is, parallel with the rotation axis Je. The motor Mf includes an output shaft 23 and is oriented such that a shaft line 23a of the output shaft 23 is perpendicular to the rotation axis Jd, that is, parallel with the rotation axis Je, similarly to the motor Me. This means that the shaft line 22a of the output shaft 22 in the motor Me and the shaft line 23a of the output shaft 23 in the motor Mf are parallel with each other.

The first power transmission mechanism 20 includes a first driving-side rotating body 30, an intermediate belt 31, an intermediate rotating body 32, a first belt 33, a first rotating body 34, a driving gear 35, and a driven gear 36. The second power transmission mechanism 21 includes a second driving-side rotating body 40, a second belt 41, a second rotating body 42, a first intermediate shaft 43, and a second intermediate shaft 44.

The second power transmission mechanism 21 will be first described. The second driving-side rotating body 40 is attached to the output shaft 23 of the motor Mf to be rotated together with the output shaft 23 around the shaft line 23a. This means that a rotation axis 40a of the second driving-side rotating body 40 is coaxial with the rotation axis 23a of the output shaft 23. The second driving-side rotating body 40 also includes a pulley, for example, around which the second belt 41 is wound, as well illustrated in FIG. 3.

The second rotating body 42 is attached to an end of the first intermediate shaft 43 and at the same time oriented such that a rotation axis 42a thereof is coaxial with the rotation axis Je of the second wrist 14b. The second rotating body 42 is also oriented such that the rotation axis 42a thereof is parallel with the rotation axis 40a of the second driving-side rotating body 40 described above.

The second rotating body 42 also includes a pulley, for example, around which the second belt 41 is wound. With this configuration in which the second driving-side rotating body 40 and the second rotating body 42 each include a pulley, the drive force of the motor Mf can be transmitted to the second rotating body 42 with a simple structure.

Furthermore, the second driving-side rotating body 40 is disposed so as to overlap the second rotating body 42 in the direction of the rotation axis 42a (the X axis direction in FIGS. 2 and 3). Accordingly, the second belt 41, as viewed from the Z axis direction, is wound around the second driving-side rotating body 40 and the second rotating body 42 in the direction parallel with the direction perpendicular to the rotation axis 42a (the Y axis direction).

Furthermore, the pulley diameter of the second rotating body 42 is set larger than that of the second driving-side rotating body 40. With this configuration, the drive force of the motor Mf is changed or more specifically, its speed is reduced between the second driving-side rotating body 40 and the second rotating body 42 to be transmitted to the first intermediate shaft 43. Although the speed of the drive force of the motor Mf is reduced in the description above, the embodiment is not limited thereto, and the speed of the drive force of the motor Mf may be increased with the pulley diameter of the second rotating body 42 set smaller than that of the second driving-side rotating body 40.

The first intermediate shaft 43 is rotatably supported by the body 15 of the first wrist 14a. To the other end of the first intermediate shaft 43, a bevel gear 45 is attached. The second intermediate shaft 44 is oriented such that the shaft line 44a thereof is perpendicular to the rotation axis 42 (in other words, the rotation axis Je) of the second rotating body 42 and parallel with the rotation axis Jf, and is rotatably supported by the second wrist 14b. Attached to the second intermediate shaft 44 is a bevel gear 46 that is engaged with the bevel gear 45. Furthermore, the second intermediate shaft 44 is connected to the third wrist 14c although this is not illustrated.

With the second power transmission mechanism 21 configured as described above, the drive force of the motor Mf is transmitted to the second rotating body 42 through the second driving-side rotating body 40 and the second belt 41. Thereafter, the second rotating body 42 transmits the drive force of the motor Mf thus transmitted to the third wrist 14c through the first intermediate shaft 43, the bevel gear 45, the bevel gear 46, and the second intermediate shaft 44.

The first power transmission mechanism 20 will be next described. The first driving-side rotating body 30 is attached to the output shaft 22 of the motor Me to be rotated together with the output shaft 22 around the shaft line 22a. This means that the rotation axis 30a of the first driving-side rotating body 30 is coaxial with the rotation axis 22a of the output shaft 22. The first driving-side rotating body 30 also includes a pulley, for example, around which the intermediate belt 31 is wound.

The intermediate rotating body 32 includes an input-side rotating body 32a and an output-side rotating body 32b, and is provided between the motor Me and the first rotating body 34. The input-side rotating body 32a and the output-side rotating body 32b, each having a coaxial rotation axis 32c that is coaxial with each other, are disposed so as to overlap with each other along the direction of the rotation axis 32c thereof. The rotation axis 32c of the intermediate rotating body 32 is set parallel with the X axis direction, or more specifically, with the rotation axes 30a, 34a, and 42a of the first driving-side rotating body 30, the first rotating body 34, and the second rotating body 42, respectively, for example. Furthermore, the input-side rotating body 32a and the output-side rotating body 32b are integrally connected to each other with a connection shaft 32d and rotatably supported by the body 15 of the first wrist 14a.

The input-side rotating body 32a and the output-side rotating body 32b each have a pulley, for example, and the intermediate belt 31 described above is wound around the input-side rotating body 32a while the first belt 33 is wound around the output-side rotating body 32b. It should be noted that the intermediate rotating body 32 will be further described below in detail.

The first rotating body 34 is oriented such that the rotation axis 34a thereof is parallel with the rotation axis 42a of the second rotating body 42 and rotatably supported by the body 15 of the first wrist 14a. The first rotating body 34 also includes a pulley, for example, and the first belt 33 described above is wound around the first rotating body 34, as well illustrated in FIG. 3. With this configuration in which each of the first driving-side rotating body 30, the input-side rotating body 32a, the output-side rotating body 32b, and the first rotating body 34 has a pulley, the drive force of the motor Me can be transmitted to the first rotating body 34 with a simple structure.

Attached to the first rotating body 34 is the driving gear 35 that is rotated integrally with the first rotating body 34. The driving gear 35 may be, but not be limited to, a spur gear, for example, and may be other type of gear such as a helical gear.

The driven gear 36 is formed so as to be engaged with the driving gear 35 described above. The driven gear 36 may be, but not be limited to, a scissors gear, for example, and may be other type of gear such as a spur gear or a helical gear. The driven gear 36 is disposed such that the rotation axis 36a thereof is coaxial with the rotation axis 42a of the second rotating body 42 and the rotation axis Je of the second wrist 14b, and is rotatably supported by the body 15 of the first wrist 14b. The driven gear 36 is formed into a hollow shape, through which the first intermediate shaft 43 described above is inserted. The driven gear 36 is also connected to the second wrist 14b (not illustrated).

With the configuration described above, the first power transmission mechanism 20 transmits the drive force of the motor Me to the first rotating body 34 through the first driving-side rotating body 30, the intermediate belt 31, the input-side rotating body 32a of the intermediate rotating body 32, the output-side rotating body 32b of the intermediate rotating body 32, and the first belt 33. 3Thereafter, the first rotating body 34 transmits the drive force of the motor Me thus transmitted to the second wrist 14b through the driving gear 35 and the driven gear 36.

The first rotating body 34 and other components will now be described further in detail. The first rotating body 34 is displaced to a position where the rotation axis 34a of the first rotating body 34 and the rotation axis 42a of the second rotating body 42 are parallel with each other and do not interfere with each other, as illustrated in FIG. 2. More specifically, the first rotating body 34 is disposed in a manner displaced by a predetermined distance in the direction apart from the second rotating body 42, that is, to the side at which the motors Me and Mf and the intermediate rotating body 32, for example, are disposed (the negative side in the Y axis direction in FIG. 2).

Furthermore, the first rotating body 34 is disposed so as to overlap the second rotating body 42 in the direction of the rotation axis 42a of the second rotating body 42 (the X axis direction). In other words, the position of the first rotating body 34 is within a range of the second rotating body 42 when viewed from a direction perpendicular to the rotation axis 42a of the second rotating body 42.

The first rotating body 34 corresponds to first transmission means for transmitting the drive force of the motor (the first output means) Me to the second wrist (the second wrist means) 14b. The second rotating body 42 corresponds to second transmission means for transmitting the drive force of the motor (the second output means) Mf to the third wrist (the third wrist means) 14c, in which the second transmission means has the rotation axis 42a that is parallel with the rotation axis 34a of the first rotating body (the first transmission means) 34 and is apart from the rotation axis 34a of the first rotating body (the first transmission means) 34 by a predetermined distance.

As described above, the first rotating body 34, as viewed from the Z axis direction, is displaced relative to second rotating body 42 to the negative side in the Y axis direction, for example, and further overlaps the second rotating body 42 in the X axis direction. This configuration can reduce the thickness of the first power transmission mechanism 20 in the direction of the rotation axis 42a. This can further reduce the width of the first wrist 14a containing the first power transmission mechanism 20 (marked with sign A in FIG. 2) in the direction of the rotation axis 42a, that is, the X axis direction.

With the reduction of the width A of the first wrist 14a, that is, the size of the first wrist 14a, the first wrist 14a can be more free from interference with a workpiece, for example, when the robot 1 is performing a predetermined operation such as arc welding. The reduction of the size of the first wrist 14a can further reduce the weight of the wrist section 14.

The first rotating body 34, as viewed from the Z direction, overlaps the second rotating body 42 in the X axis direction in the description above. This does not mean the first rotating body 34 must overlap the second rotating body 42 completely, but also covers cases where the first rotating body 34 overlaps the second rotating body 42 partially. Even in the cases of partial overlapping, the effects described above can be achieved.

The intermediate rotating body 32, the belts 31, 33, and 41, and other components will be next described in detail. As illustrated in FIG. 2, the input-side rotating body 32a of the intermediate rotating body 32 is disposed so as to overlap the first driving-side rotating body 30 in the direction of the rotation axis 32c (the X axis direction). With this configuration, the intermediate belt 31, as viewed from the Z axis direction, is wound around the first driving-side rotating body 30 and the input-side rotating body 32a in the direction parallel with the Y axis direction.

Furthermore, the first driving-side rotating body 30 and the input-side rotating body 32a are disposed so as not to overlap the second driving-side rotating body 40 and the second rotating body 42 in the direction of the rotation axis 42a (the X axis direction). More specifically, the first driving-side rotating body 30 and the input-side rotating body 32a are positioned so as to be displaced relative to the second driving-side rotating body 40 and the second rotating body 42 to the negative side in the X axis direction, for example. The intermediate belt 31, as viewed from the Z axis direction, is therefore positioned so as not to overlap the second belt 41 in the X axis direction. This configuration can prevent the intermediate belt 31 from interfering with the second belt 41.

Although the intermediate belt 31, as viewed from the Z axis direction, is positioned so as not to overlap the second belt 41 in the X axis direction in the description above, the embodiment is not limited thereto. The intermediate belt 31 may partially overlap the second belt 41 in the X axis direction.

Furthermore, the output-side rotating body 32b is disposed so as to overlap the first rotating body 34 in the direction of the rotation axis 32c (the X axis direction). With this configuration, the first belt 33, as viewed from the Z axis direction, is wound around the output-side rotating body 32b and the first rotating body 34 in the direction parallel with the Y axis direction.

Furthermore, the output-side rotating body 32b and the first rotating body 34 are disposed so as to overlap the second driving-side rotating body 40 and the second rotating body 42 in the direction of the rotation axis 42a (the X axis direction). As illustrated in FIG. 3, the output-side rotating body 32b and the first rotating body 34 are disposed so as to enter the region inside the second belt 41 as viewed from the X axis direction.

The first belt 33 wound around the output-side rotating body 32b and the first rotating body 34 is therefore positioned inside the second belt 41 as viewed from the rotation axis 34a of the first rotating body 34 (as viewed from the X axis direction). With this configuration, the first belt 33, as viewed from the Z axis direction, overlaps the second belt 41 in the X axis direction, which reduces the width of the first wrist 14a in the vicinity of the first belt 33 in the X axis direction.

Furthermore, the pulley diameters of the first driving-side rotating body 30, the input-side rotating body 32a, the output-side rotating body 32b, and the first rotating body 34 are set different from each other, as illustrated in FIG. 3. More specifically, the pulley diameter of the input-side rotating body 32a is set larger than that of the first driving-side rotating body 30, and the pulley diameter of the output-side rotating body 32b is set smaller than that of the input-side rotating body 32a, for example. Furthermore, the pulley diameter of the first rotating body 34 is set larger than that of the output-side rotating body 32b.

With this configuration, the drive force of the motor Me output from the first driving-side rotating body 30 is first changed, or more specifically, its speed is reduced between the first driving-side rotating body 30 and the input-side rotating body 32a, and then the drive force is further changed, or more specifically, its speed is reduced between the output-side rotating body 32b and the first rotating body 34.

Because the first power transmission mechanism 20 includes the intermediate rotating body 32, a high speed reduction ratio can be achieved. More specifically, the speed of the drive force of the motor Me can be remarkably reduced in two stages before the force is transmitted to the first rotating body 34.

Although the pulley diameters of the rotating bodies 30, 32a, 32b, and 34 are different from each other in the description above, this is merely an example and not intended to limit the embodiment. More specifically, even in cases where the pulley diameter of the first driving-side rotating body 30 is the same as that of the output-side rotating body 32b or the pulley diameter of the input-side rotating body 32a is the same as that of the first rotating body 34, for example, the same effects can be achieved.

Although the speed of the drive force of the motor Me is reduced in the description above, the embodiment is not limited thereto, and the speed of the drive force of the motor Me may be increased. Furthermore, although one intermediate rotating body 32 is provided in the description above, two or more intermediate rotating bodies may be provided.

As described above, in the first embodiment, the first rotating body 34 is displaced relative to the second rotating body 42 to a position where the rotation axis 34a of the first rotating body 34 and the rotation axis 42a of the second rotating body 42 are parallel with each other and do not interfere with each other, and disposed so as to overlap the second rotating body 42 in the direction of the rotation axis 42a of the second rotating body 42. This configuration can reduce the width A of the first wrist 14a in the direction of the rotation axis 42a, which reduces the size of the wrist section 14.

The following describes a second embodiment.

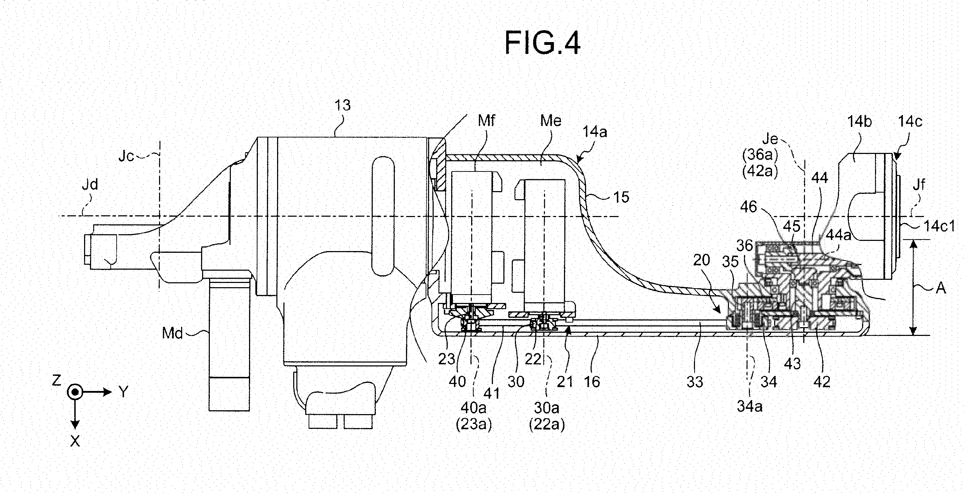

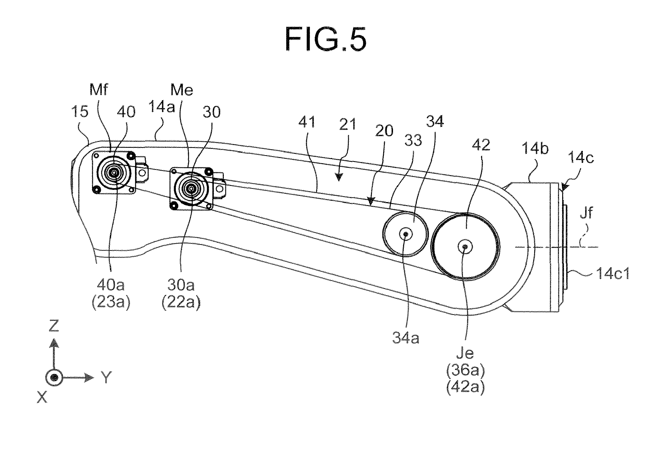

FIG. 4 is a partial sectional top view similar to FIG. 2, illustrating only a vicinity of the upper arm 13, the first wrist 14a, the second wrist 14b, and the third wrist 14c in a robot according to a second embodiment. FIG. 5 is a side view illustrating the first wrist 14a illustrated in FIG. 4 with the side-face cover 16 thereof removed therefrom, as viewed from the positive side in the X axis direction. It should be noted that in the description below, components common to the first embodiment will be referred to by like numerals and the explanation thereof will be omitted.

To explain with a focus on the difference from the first embodiment, in the robot in the second embodiment, the intermediate rotating body 32 and the intermediate belt 31 are eliminated and the first driving-side rotating body 30 is connected to the first rotating body 34 directly through the first belt 33.

Specifically, the first belt 33 instead of the intermediate belt 31 is wound around the first driving-side rotating body 30, as well illustrated in FIG. 5. The first power transmission mechanism 20 according to the second embodiment is thus configured to transmit the drive force of the motor Me to the second wrist 14b through the first driving-side rotating body 30, the first belt 33, the first rotating body 34, the driving-side gear 35, and the driven-side gear 36.

The first driving-side rotating body 30 is disposed so as to overlap the first rotating body 34 in the X axis direction, as illustrated in FIG. 4. In other words, the first driving-side rotating body 30 and the second driving-side rotating body 40 are arranged in such a manner that positions of the first and second driving-side rotating bodies 30 and 40 are within a range of the second rotating body 42 when viewed from the direction perpendicular to the rotation axis 42a of the second rotating body 42. The first belt 33 is thus wound around the first driving-side rotating body 30 and the first rotating body 34 in the direction parallel with the direction (the Y axis direction) that is perpendicular to the rotation axis 42a. Furthermore, the first driving-side rotating body 30 and the first rotating body 34 are disposed so as to enter the region inside the second belt 41 as viewed from the X axis direction, as illustrated in FIG. 5.

The first belt 33, which is wound around the first driving-side rotating body 30 and the first rotating body 34, is thus disposed inside the second belt 41 as viewed from the direction (the X axis direction) of the rotation axis 34a of the first rotating body 34. With this configuration, the first belt 33, as viewed from the Z axis direction, overlaps the second belt 41 in the X axis direction, which reduces the width of the first wrist 14a in the vicinity of the first belt 33 in the X axis direction.

Furthermore, the first driving-side rotating body 30, the first belt 33, and the first rotating body 34 are positioned inside the second belt 41 as viewed from the X axis direction, which reduces the thicknesses of the first power transmission mechanism 20 and the second power transmission mechanism 21 in the Z axis direction. This can also reduce the width of the first wrist 14a in the Z axis direction.

As described above, the second embodiment does not require the intermediate rotating body 32 or the intermediate belt 31. This configuration can simplify the structure of the first power transmission mechanism 20 and further reduce the size of the wrist section 14. It should be noted that because the configuration and the effects of the remaining part are the same as in the first embodiment, the explanation thereof will be omitted.

Although the second embodiment above describes an example in which the first belt 33 is positioned inside the second belt 41 as viewed from the X axis direction, the embodiment is not limited thereto. A modification of the second embodiment will be described below.

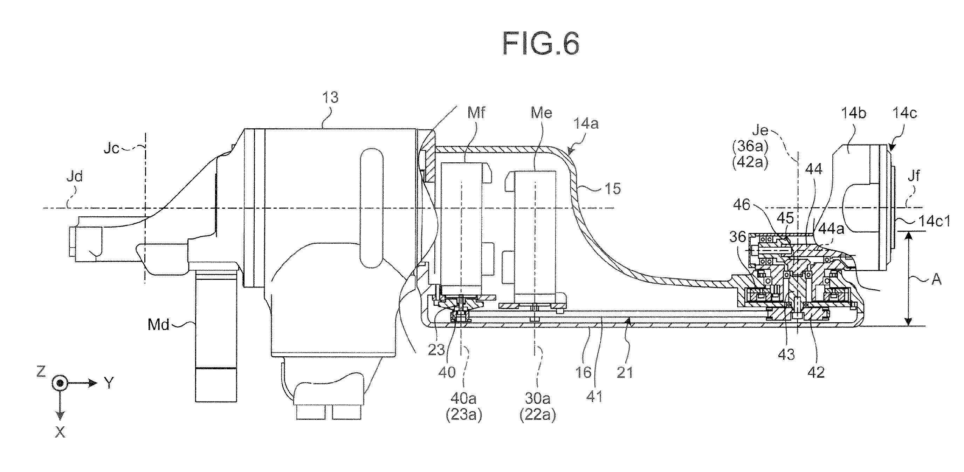

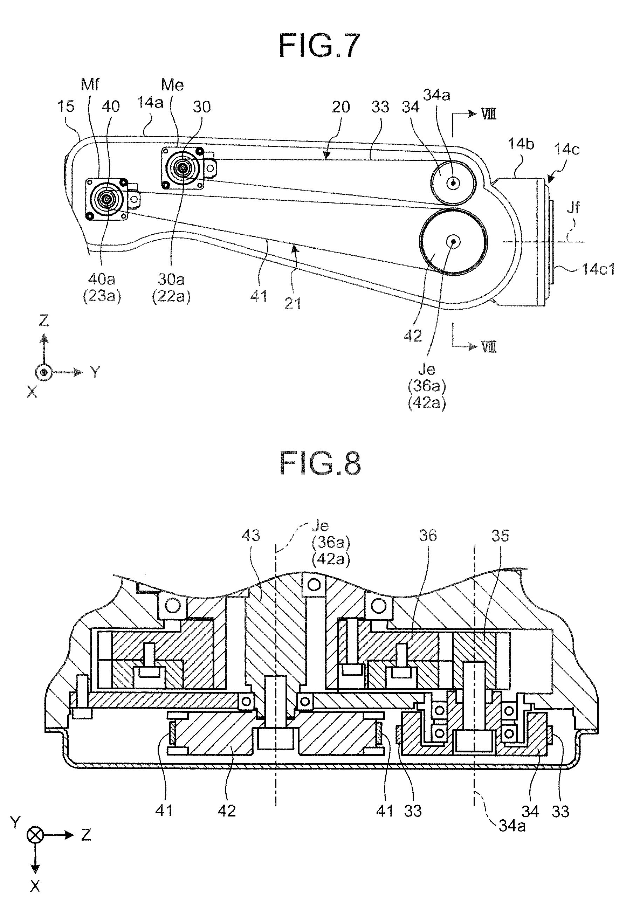

FIG. 6 illustrates a modification of the robot according to the second embodiment and is a partial sectional top view illustrating only a vicinity of the upper arm, the first wrist, the second wrist, and the third wrist. FIG. 7 is a side view illustrating the first wrist 14a illustrated in FIG. 6 with the side-face cover 16 thereof removed therefrom, as viewed from the positive side of the X axis direction. FIG. 8 is a close-up sectional view taken along line VIII-VIII in FIG. 7.

In this modification, the first driving-side rotating body 30 and the first rotating body 34 are disposed so as to enter the region outside the second belt 41 as viewed from the X axis direction, that is, the region between the body 15 of the first wrist 14a and the second belt 41 as viewed from the X axis direction, as illustrated in FIG. 7.

The first belt 33, which is wound around the first driving-side rotating body 30 and the first rotating body 34, is thus positioned outside the second belt 41 as viewed from the direction of the rotation axis 34a of the first rotating body 34 (as viewed from the X axis direction). With this configuration, interference between the first belt 33 and the second belt 41 can be effectively prevented.

It should be noted that the first rotating body 34 and the driving gear 35 hide behind the second rotating body 42 and are not illustrated in FIG. 6, the configurations thereof are substantially the same as those in the first and the second embodiments, as seen from FIG. 8. Because the configuration and the effects of the remaining part are the same as in the second embodiment, the explanation thereof will be omitted.

Although, each of the first driving-side rotating body 30, the input-side rotating body 32a, the output-side rotating body 32b, the first rotating body 34, the second driving-side rotating body 40, and the second rotating body 42 in the embodiments described above includes a pulley, the embodiments are not limited thereto. More specifically, each of the rotating bodies may include a gear, for example. It should be noted that if each of the rotating bodies includes a gear, the drive forces of the motors Me and Mf may be transmitted to the second wrist 14b and the third wrist 14c with the rotating bodies connected to each other through a roller chain, for example.

The robot 1 is configured as a robot for arc welding. However, the embodiments are not limited to such a configuration and the robot 1 may be other type of robot. Specifically, although the robot 1 includes the torch 2 as an end effecter in the configuration described above, the robot may include a hand for holding a workpiece or an suction section for sucking and retaining a workpiece as an end effector and perform operations such as delivery of the workpiece using the hand or other part.

The robot 1 has been described as a six-axis robot. However, the embodiments are not limited to such a configuration. A robot that has a structure other than a six-axis structure, for example, a seven-axis or an eight-axis robot may be used.

## Claims

1. A robot (1) comprising:
a first wrist (14a) connected to an arm (13);
a second wrist (14b) connected to the first wrist (14a) rotatably around a first rotation axis (Je);
a third wrist (14c) connected to the second wrist (14b) rotatably around a second rotation axis (Jf) perpendicular to the first rotation axis (Je);
a first actuator (Me) configured to rotationally drive the second wrist (14b);
a first rotating body (34) configured to transmit a drive force of the first actuator (Me) to the second wrist (14b);
a second actuator (Mf) configured to rotationally drive the third wrist (14c); and
a second rotating body (42) configured to transmit a drive force of the second actuator (Mf) to the third wrist (14c), wherein
the first rotating body (34) and the second rotating body (42) are arranged at positions where rotation axes (34a and 42a) of the first and second rotating bodies (34 and 42) are parallel with each other and do not interfere with each other in such a manner that the position of the first rotating body (34) is within a range of the second rotating body (42) when viewed from a direction perpendicular to the rotation axis (42a) of the second rotating body (42).

2. The robot (1) according to claim 1, further comprising:
a first belt (33) wound around the first rotating body (34) and configured to transmit the drive force of the first actuator (Me) to the first rotating body (34); and
a second belt (41) wound around the second rotating body (42) and configured to transmit the drive force of the second actuator (Mf) to the second rotating body (42), wherein
the first belt (33) is disposed inside the second belt (41) as viewed from a direction of the rotation axis (34a) of the first rotating body (34).

3. The robot (1) according to claim 1 or 2, further comprising:
an intermediate rotating body (32) disposed between the first actuator (Me) and the first rotating body (34) and configured to change the drive force of the first actuator (Me) and transmit the changed drive force to the first rotating body (34).

4. The robot (1) according to any one of claims 1 to 3, further comprising:
a first driving-side rotating body (30) attached to an output shaft (22) of the first actuator (Me) and configured to output the drive force of the first actuator (Me) to the first rotating body (34); and
a second driving-side rotating body (40) attached to an output shaft (23) of the second actuator (Mf) and configured to output the drive force of the second actuator (Mf) to the second rotating body (42), wherein
the first driving-side rotating body (30) and the second driving-side rotating body (40) are arranged in such a manner that positions of the first and second driving-side rotating bodies (30 and 40) are within a range of the second rotating body (42) when viewed from the direction perpendicular to the rotation axis (42a) of the second rotating body (42).

5. The robot (1) according to any one of claims 1 to 4, wherein each of the first rotating body (34) and the second rotating body (42) includes a pulley.
